# EUROPEAN PATENT APPLICATION

(11) **EP 2 093 199 A1**
(43) Date of publication of application: **26.08.2009**
(21) Application number: 09151955.3
(22) Date of filing: 03.02.2009
(51) Int. Cl.: C02F 11/12, C02F 11/00, C02F 1/26

(54) **Process for removing organic pollutants from sludge-based waste and substratums**

(30) Priority: 18.02.2008 IT RM20080091
(71) Applicant: Ecotec Gestione Impianti S.r.l., 96100 Siracusa (IT)
(72) Inventor: Imerito, Aldo, 00198 Roma (IT); Mameli, Anna, c/o Ecotec Gestione Impianti S.r.l., 00198 Roma (IT); Pisu, Massimo, c/o Ecotec Gestione Impianti S.r.l., 00198 Roma (IT); Ragona, Mario, c/o Ecotec Gestione Impianti S.r.l., 00198 Roma (IT)
(74) Representative: Di Cerbo, Mario

(57) **Abstract**

A process for removing organic pollutants from sludge-based materials or wastes having a high concentration of hydrocarbons, comprising the following operations:
a) optional separation and washing with water, optionally added, of fractions having a > 100 m particle size, obtaining a sludge containing the fine fraction having a < 100 m particle size and the pollutants concentrated therein;
b) mixing of the sludge with a lipophilic solvent (preferably ethyl acetate) at a mixing temperature selected in the range of 15-65 deg. C;
c) mechanical separation of the liquid phase, containing the pollutants and the solvent, from a solid phase consisting in the treated sludge;
d) recovery of the solvent from the liquid phase by any one known technique;
e) washing of the solid phase with water, until complete removal of the residual solvent;
f) separation, by decanting, of a solid fraction, consisting of the washed solid, and an aqueous phase saturated with solvent;
g) dewatering of the solid fraction obtained in step f);
h) recovery of the solvent from the aqueous phase by any one known technique.

## Description

The present invention refers to the decontamination of sludge-based materials or wastes having a high concentration of hydrocarbons.

As it is known, these materials derive from industry processing wastes, wastewater treatment line, tank remediation, and line and plant cleaning and maintenance.

Their composition can be highly variable, yet these materials have in common the fact of being contaminated by aromatic aliphatic hydrocarbons, aromatic polynuclear hydrocarbons, aliphatic and aromatic organochlorinated compounds, pesticides, dioxins and dibenzofurans.

Hereinafter, by "sludge" substratum it is meant a sludge material containing a high concentration of hydrocarbons (between 1000 mg/Kg and 500,000 mg/Kg) and having a humidity content comprised in the range of 10-70%.

As it is known, commonly used disposal techniques envisage making these materials compliant with requirements of disposability in authorized dumps (in Italy, according to Ministerial Decree of August 3, 2005 and subsequent modifications and integrations). This may occur by means of mechanical dehydration, addition of adsorbing solid products (e.g., urasite or bentonite) and hydraulic and/or inertizing and/or dehydrating binders (e.g., calcium oxide).

These techniques, however, are no more successfully applicable, owing to the fact of having some relevant limitations. In fact, when said substratums have a total hydrocarbon content equal to or higher than 1000 mg/Kg, or exhibit contamination by BTEX or substances classified as class 1 and 2 carcinogenics in relevant concentrations, they should be considered and classified as hazardous wastes (and, optionally, toxic and harmful). Therefore, they can be disposed of in suitable dumps only, or need to be subjected to treatments (such as thermal destruction) costly or having an acceptable environmental impact.

Moreover, in these last years, among the main aims sought by laws on waste disposal and management, the reduction/abatement of produced quantities and, accordingly, of volumes to be conveyed to the dump, is of primary importance. The consequence of the enforcement of these laws is to boost materials recovery and reuse in order to address depletion of residual volumes in existing dumps.

These provisions, in Italy, already envisaged by Legislative Decree (D.L.) 22/97, have been fully acknowledged by the Environmental Consolidation Act (D.L. 152/06).

Waste management strategy, currently promoted by the European Union, is based on priorities thus structured:
- reduction of the quantity of wastes produced, through use of different designing criteria and modes for products and production processes, assisted by education to rational consumption;
- reuse of the products and components that, though discarded as wastes, did not yet end their useful life; reuse entails that the item at issue continues to be used for purposes analogous to the original ones (e.g., a bottle remains such, even though declassified from food container to container for non-food liquids;
- recycling of material fractions still useful as input of production processes; recycling therefore consists in a transformation process of the material recovered from wastes;
- recovery of energy for the fraction still remaining downstream of reuse and recycling interventions.

This integrated waste management (referred to as "4R", from the initials of the four words Reduction, Reuse, Recycling, Recovery) corresponds to an intervention philosophy based no more on the concept of disposal, but on a series of interventions aimed at optimizing the recovery and minimizing the impact of final disposal on the environment.

Only what finds no place in any of the four putative treatment routes (reduction, reuse, recycling and recovery) has to be destined to final disposal in a controlled dump.

Therefore, there emerges a concept of waste management according to an "integrated disposal system" having waste exploitation as a short-, middle-term goal and reduction of waste production as a long-term goal.

To date, only two routes proved viable, in terms of disposal, for the typology of substratums addressed by the present invention: dump for hazardous or toxic harmful wastes, and thermal destruction. In both cases, those are economically expensive and unsatisfactory choices, even from an environmental standpoint.

The adoption instead of the process according to the invention for sludges allows to attain several advantages:
1. Waste is declassified, enabling conveyance to dumps with a lower hazardousness class, allowing a non-negligible economic saving and a more rational use of dump installations;
2. Extracted hydrocarbons, depending on their composition, may be sent to incineration, with the entailed energy recovery.
3. The process overall has an impact, from the environmental standpoint, decidedly lower than that of the other treatments applied to date.

In fact, subject of the present invention is a process, for removing organic pollutants from sludge-based materials or wastes having a high concentration of hydrocarbons, comprising the following operations:
a) optional separation and washing with water, optionally added, of fractions having a ≥ 100 µm particle size, obtaining a sludge containing the fine fraction having < 100 µm particle size and the pollutants concentrated therein;
b) mixing of the sludge with a lipophylic solvent at a temperature comprised in the range of 15-65°C;
c) mechanical separation of the liquid phase, containing the pollutants and the solvent, from the solid phase consisting in the treated sludge;
d) recovery of the solvent from the liquid phase by any one known technique;
e) washing of the solid phase with water, until complete removal of the residual solvent;
f) separation by decanting of a solid fraction, consisting in the washed solid, and a solvent-saturated aqueous phase;
g) dewatering of the solid fraction obtained in f);
h) recovery of the solvent from the aqueous phase by any one known technique.

Preferably, the mixing of the sludge with a lipophylic solvent may be executed at a temperature comprised in the range of 30-50°C for a time comprised in the range of 5-60 min.

The sludge/lipophylic solvent mixing temperature may be obtained by providing heat from the outside by heat exchange systems, such as plate exchangers and pipe-bundle exchangers, or by heat sources, such as boilers.

Alternatively, the sludge/lipophylic solvent mixing temperature may be obtained without heat contribution from the outside, by making the mixing take place in a closed reactor, due to the effect of friction induced by sludge/lipophylic solvent stirring and reactor geometry, in terms of shape of the stirrer rotor and of shape of the breakwaters inserted therein.

The sludge-based material or the waste can contain a hydrocarbon concentration ranging from 1000 to 500,000 mg/Kg, and can have a humidity content ranging from 10 to 70%.

In a preferred embodiment, the lipophylic solvent may be ethyl acetate.

The w/w ratio between lipophylic solvent and sludge-based material or waste ranges from 0.2 to 5.0.

The ratio between ethyl acetate and sludge-based material or waste can be comprised in the range 0.5 - 1.0.

The separation at c) can be selected from the group comprising the operations of decanting and removal of the liquid.

The solvent recovery operation in d) and h) may be executed by distillation or evaporation.

The solvent recovered in d) and h) can be recycled in b).

Operations b) to e) can be repeated at least twice.

The organic pollutants to be removed can be aliphatic hydrocarbons, aromatic hydrocarbons, polynuclear aromatic hydrocarbons, aliphatic and aromatic organochlorinated compounds, pesticides, dioxins and dibenzofurans.

The process according to the invention may be conducted both batchwise or in continuous.

The most relevant advantages associated to the adoption of the process according to the invention can be resumed as follows:
- it is possible to concomitantly attain a reduction in waste quantity and a clear-cut improvement of its qualitative characteristics, since the washing with a lipophylic solvent remarkably reduces hydrocarbon content, drastically decreasing waste hazardousness and toxicity characteristics and enabling its disposal in a dump for lower-category wastes;
- the mix of extracted hydrocarbons can be sent, provided there are conditions therefor, to an incinerator, thereby contributing to optimize energy source exploitation.

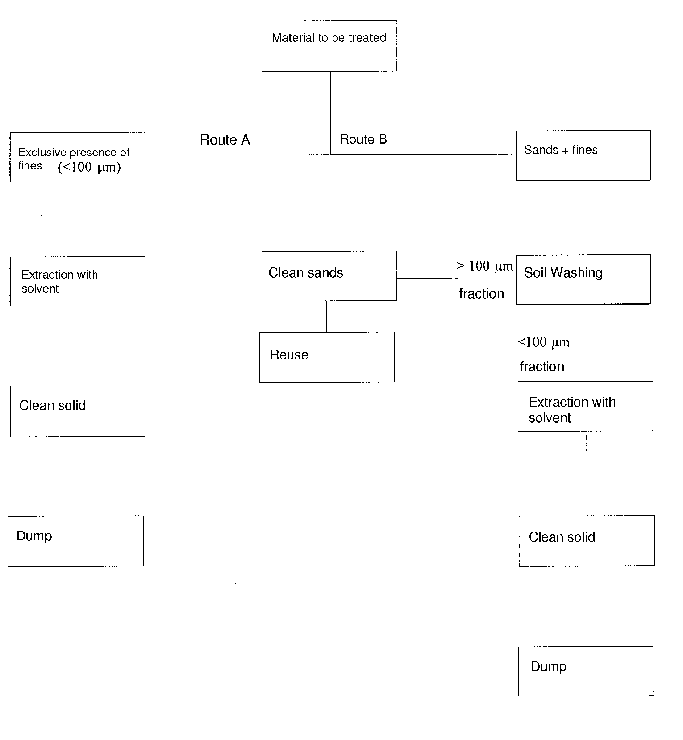

The sole Figure annexed is a block diagram showing the two main embodiments of the process according to the invention. The first one is adopted when the material to be treated contains only fractions with <100 µm particle size (Route A). The second embodiment (Route B) is instead adopted when the material to be treated contains a certain percent of fractions with a > 100 µm particle size.

With reference to the Figure, the process according to the invention, as mentioned hereto, can be carried out via two different routes, depending on matrix properties.

More in detail, the process to which the material to be treated is subjected is as follows:
1. dispersion in water
2. optional mechanical separation of fractions with a > 100 µm particle size in aqueous environment
3. thickening of the pulp resulting from steps 1 and 2 by decanting and/or mechanical wringing (for this purpose, belt press, filter press, centrifuge, hydrocyclones may be used) obtaining a thickened sludge
4. sending of the thickened sludge to extraction with solvent
5. extraction with the lipophylic solvent
6. washing of the solvent-extracted sludge with water, to remove solvent residues. In this step an aqueous pulp is obtained.
7. thickening, as in step 3, of the aqueous pulp obtained in step 6, obtaining a shovellable thickened sludge, compliant with requirements for disposal in an authorized dump.

With regard to point 2, inlet materials can contain a certain percent of fractions with a > 100 µm particle size, also owing to the optional addition of specific adsorbents (e.g., bentonite) beforehand. In this case, the substratum cannot be directly sent to the treatment with solvent, but needs to be treated beforehand by means of soil washing, so as to separate the fractions and send to the extraction treatment with solvent only the < 100 µm fraction, where pollutants concentrate (Route B). If instead the nature of the materials is such as not to contain fractions of greater particle size, they can be directly sent to the solvent-treatment section (Route A).

Considering the potentials for initial pollution of these substratums and the object of the process according to the invention, it can be necessary not to push the treatment to total decontamination, but to regulate it in order to obtain a decrease of the quantity of pollutants of hydrocarbon origin, thereby enabling the sending of treated materials to a non-hazardous waste dump.

The part with a > 100 µm particle size fraction can instead be sent to recovery.

Hereto, a general description of the present invention was given. With the aid of the sole annexed Figure and the examples, hereinafter a more detailed description thereof will be given, aimed at making better understood its objects, features, advantages and operation steps.

### EXAMPLE 1

The material subjected to treatment is sludge from refinery processes, generated by biological treatment of process waters, plant cleaning and maintenance operations, or tank remediation (bottoms).

This sludge underwent a first mechanical dehydration treatment, and therefore it has a residual humidity content and total hydrocarbons as reported in Table 1.

**Table 1**

| **Parameters** | **M.U.** | **Values** |
|---|---|---|
| Humidity | % | 37.8 |
| Total hydrocarbons | mg/Kg | 3200 |

The substratum was subjected, in an industrial plant, to the following operations:
1. Dispersion in water.
2. Treatment by means of soil washing, in aqueous environment, in a manner such as to separate fractions having a > 100 µm particle size and send to the treatment of extraction with solvent only the < 100 µm fraction, where organic pollutants concentrate.
3. Thickening of the pulp resulting from steps 1 and 2 by decanting and mechanical wringing by belt press, obtaining a thickened sludge.
4. Sending of the thickened sludge to extraction with solvent.
5. Extraction with the lipophylic solvent, ethyl acetate. The solvent is regenerated by distillation: at the column head a distillate is yielded, comprised of ethyl acetate/water, with a water content of about 3%. This azeotrope is the actual solvent working, allowing hydrocarbon extraction, and that hereinafter will be referred to as "solvent". Clean solvent is not always used; instead, in-plant it is recycled the solvent already used to treat the sludge, solvent that therefore has a certain hydrocarbon content, far however from saturation point. Inlet sludge is mixed with the solvent in stirred reactors, in a w/w ratio equal to 0.5, at a temperature ranging from 30 to 50°C, thanks to the specific geometry of the stirred reactors. The two substratums are left in contact for 10 minutes. This operation is repeated 4 times. In the last step, clean solvent is used.
6. The sludge obtained from the operations of extraction with solvent is washed with water to remove solvent residues. At this stage, an aqueous pulp is obtained.
7. Thickening, by decanting and mechanical wringing, of the aqueous pulp, obtaining a shovellable thickened sludge, compliant with requirements for disposal in an authorized dump.
8. Regeneration of the solvent by distillation.

The fraction separated at 2., having a > 100 µm particle size, is sent to recovery. The fine fraction, at the end of the treatment, possesses the characteristics reported in Table 2.

**Table 2**

| **Parameters** | **M.U.** | **Values** |
|---|---|---|
| Humidity | % | 43.6 |
| Total hydrocarbons | mg/Kg | <50 |

The total quantity of total hydrocarbons remaining in the waste is decidedly lower than the starting concentration, and enables to send the sludge resulting from the treatment according to the invention to disposal in a dump for non-hazardous wastes.

### EXAMPLE 2

The material subjected to the process according to the invention is a sludge coming from biological treatment of wastewaters of a petrochemical plant.

In this case as well, concentration of total hydrocarbons is very high (as shown in Table 3).

**Table 3**

| **Parameters** | **M.U.** | **Values** |
|---|---|---|
| Humidity | % | 30.1 |
| Total hydrocarbons | mg/Kg | 17700 |

In order to reduce their concentration in a manner such that the material may be sent to a dump for non-hazardous wastes, the substratum was subjected, in an industrial plant, to the following operations:
1. Dispersion in water.
2. Treatment by means of soil washing, in aqueous environment, in a manner such as to separate fractions having a > 100 µm particle size and send to the treatment of extraction with solvent only the < 100 µm fraction, where organic pollutants concentrate.
3. Thickening of the pulp resulting from steps 1 and 2 by decanting and mechanical wringing by belt press, obtaining a thickened sludge.
4. Sending of the thickened sludge to extraction with solvent.
5. Extraction with the lipophylic solvent, ethyl acetate. The solvent is regenerated by distillation: at the column head a distillate is yielded, comprised of ethyl acetate/water, with a water content of about 3%. This azeotrope is the actual solvent working, allowing hydrocarbon extraction, and that hereinafter will be referred to as "solvent". Clean solvent is not always used; instead, in-plant it is recycled the solvent already used to treat the sludge, solvent that therefore has a certain hydrocarbon content, far however from saturation point. Inlet sludge is mixed with the solvent in stirred reactors, in a w/w ratio equal to 0.8., at a temperature ranging from 30 to 50°C, thanks to the specific geometry of the stirred reactors. The two substratums are left in contact for 15 minutes. This operation is repeated 4 times. In the last step, clean solvent is used.
6. The sludge obtained from the operations of extraction with solvent is washed with water to remove solvent residues. At this stage, an aqueous pulp is obtained.
7. Thickening, by decanting and mechanical wringing, of the aqueous pulp, obtaining a shovellable thickened sludge, compliant with requirements for disposal in an authorized dump.
8. Regeneration of the solvent by distillation.

The fraction separated at 2., having a > 100 µm particle size, is sent to recovery. The fine fraction, at the end of the treatment, possesses the characteristics reported in Table 4.

**Table 4**

| **Parameters** | **M.U.** | **Values** |
|---|---|---|
| Humidity | % | 51.82 |
| Total hydrocarbons | mg/Kg | 205 |

In this second case as well, it is confirmed that the process according to the invention allows the removal of organic pollutants, with a 98.8% yield.

## Claims

1. A process for removing organic pollutants from sludge-based materials or wastes having a high concentration of hydrocarbons, comprising the following operations:
a) optional separation and washing with water, optionally added, of fractions having a ≥ 100 µm particle size, obtaining a sludge containing the fine fraction having a < 100 µm particle size and the pollutants concentrated therein;
b) mixing of the sludge with a lipophylic solvent at a mixing temperature selected in the range of 15-65°C;
c) mechanical separation of the liquid phase, containing the pollutants and the solvent, from a solid phase consisting in the treated sludge;
d) recovery of the solvent from the liquid phase by any one known technique;
e) washing of the solid phase with water, until complete removal of the residual solvent;
f) separation, by decanting, of a solid fraction, consisting of the washed solid, and an aqueous phase saturated with solvent;
g) dewatering of the solid fraction obtained in step f);
h) recovery of the solvent from the aqueous phase by any one known technique.

2. The process according to claim 1, wherein the mixing of the sludge with the lipophylic solvent occurs at a mixing temperature selected in the range of 30-50°C.

3. The process according to claim 1 or 2, wherein the mixing temperature is obtained by providing heat from the outside by heat exchange systems, such as plate exchangers and pipe-bundle exchangers, or by heat sources, such as boilers.

4. The process according to claim 1 or 2, wherein the mixing temperature is obtained by making the mixing take place in a closed reactor, due to the effect of friction induced by sludge/lipophylic solvent stirring and of the internal geometry of the reactor, in terms of shape of the stirrer rotor and of shape of the breakwaters inserted therein.

5. The process according to any one of the preceding claims, wherein the sludge-based material or the waste contains a hydrocarbon concentration ranging from 1000 to 500,000 mg/Kg, and has a humidity content ranging from 10 to 70%.

6. The process according to any one of the preceding claims, wherein the lipophylic solvent is ethyl acetate.

7. The process according to any one of the preceding claims, wherein the w/w ratio between lipophylic solvent and sludge-based material or waste ranges from 0.2 to 5.0.

8. The process according to claim 7, wherein the ratio between ethyl acetate and sludge-based material or waste is comprised in the range 0.5-1.0.

9. The process according to any one of the preceding claims, wherein the mixing with the lipophylic solvent is executed at room temperature, for a time comprised in the range of 5-60 minutes.

10. The process according to any one of the claims 1 to 9, wherein the separation at c) is selected from the group comprising the operations of decanting and of removal of the liquid.

11. The process according to any one of the claims 1 to 10, wherein the solvent recovery operation in d) and h) is executed by distillation or evaporation.

12. The process according to any one of the claims 1 to 11, wherein the solvent recovered in d) and h) is recycled in b).

13. The process according to any one of the preceding claims 1 to 12, wherein the operations b) to e) are repeated at least twice.

14. The process according to any one of the preceding claims, wherein the organic pollutants to be removed belong to the group comprising aliphatic and aromatic hydrocarbons, polynuclear aromatic hydrocarbons, aliphatic and aromatic organochlorinated compounds, pesticides, dioxins and dibenzofurans.

15. The process according to any one of the claims 1 to 14, which is conducted both batchwise or in continuous.
